# EUROPEAN PATENT APPLICATION

(11) **EP 3 447 691 A1**
(43) Date of publication of application: **27.02.2019**
(21) Application number: 17187776.4
(22) Date of filing: 24.08.2017
(51) Int. Cl.: G06N 99/00

(54) **SYSTEM AND METHOD FOR COMBINING LEARNING SYSTEMS**

(71) Applicant: Deutsche Telekom AG, 53113 Bonn (DE); Technische Universität Berlin, 10623 Berlin (DE)
(72) Inventor: ROSHANDEL, Mehran, 13591 Berlin (DE); TAJIK, Shahin, 12105 Berlin (DE); LÖHLEIN, Bernhard, 97837 Erlenbach (DE); KETABDAR, Hamed, 10555 Berlin (DE); SCHÜSSLER, Martin, 39291 Möser (DE)
(74) Representative: Vossius & Partner Patentanwälte Rechtsanwälte mbB

(57) **Abstract**

A method for combing least two learning systems for data processing, wherein measurement result data of at least one predetermined time interval is measured and provided to at least two learning systems, wherein each measurement result data of a predetermined time interval is separately processed by each of the learning systems and the learning systems are configured to calculate a respective numeric score for each measurement and each learning system, wherein the respective numeric score is classified by a respective consolidation function and the consolidation function is configured to classify a plurality of respective numeric scores into at least two respective classification groups, each classification group corresponding to at least two states, and wherein the respective classification groups of the at least two learning systems are merged by a classification group merging function to at least one state classification based on a merging model.

## Description

The invention relates to the field of data processing. In particular, the invention relates to the field of machine learning. More particular, the invention relates to a machine learning system which classifies a state of a system based on a large amount of unrelated real time data.

When a complex data processing infrastructure, e.g. an arrangement of telecommunication servers, is monitored, a large amount of real time data is measured and recorded. Processing said data allows for a detailed analysis of the state of the monitored system.

In state of the art monitoring systems one or more machine learning (ML) systems are used. Said ML systems usually analyze the recorded data in the time domain. Common ML systems need to be either manually configured or are automatically trained based on a set of training data. Said training data must contain the correct classification response.

Hereinafter classification is described in terms of two categories, normal and abnormal. However, this restriction is merely for maintaining the intelligibility of this description and not intended to limit the scope of the invention. In fact, the skilled person can easily modify the classification to use a plurality of categories and/or different categories.

If provided with sufficiently labeled training data, a ML system can be configured and/or trained to recognize virtually all states of the system. However, the more sophisticated the ML system is, the more time-consuming the data processing is. Furthermore, a high classification success for a specific type of event often results in a high probability of a false positive classification and/or a reduced number of recognizable states.

As an alternative time spectrum, i.e. frequency domain, ML systems could be used. Said systems do not process the time domain data but rather the frequency domain data. In other words, said systems do not learn based on the numeric real time data but based on the change of the numeric real time data.

An anomaly of the system state can in some cases be recognized by a fast changing of the numeric real time data. In such cases a time domain based ML system often cannot provide sufficient classification result. On the other hand an anomaly of the system state may also be characterized by a slow variation of the numeric real time data; in that case a frequency domain based ML system can also not provide sufficient classification results.

It is an object of the present invention to provide an improved ML system. This object is achieved with the features of the subject-matter of the independent claims. The dependent claims relate to further aspects of the invention.

The invention relates to a method for combing least two learning systems for data processing. The measurement result data of at least one predetermined time interval is measured and provided to at least two learning systems. Each measurement result data of a predetermined time interval is separately processed by each of the learning systems and the learning systems are configured to calculate a respective numeric score for each measurement and each learning system. The respective numeric score is classified by a respective consolidation function and the consolidation function is configured to classify a plurality of respective numeric scores into at least two respective classification groups, each classification group corresponding to at least two states. The respective classification groups of the at least two learning systems are merged by a classification group merging function to at least one state classification based on a merging model.

In one aspect of the invention a configuration of at least one of the respective consolidation functions and/or the learning systems is adapted based on the current result of the merged state classification and/or the configuration of at least one of the respective consolidation functions and/or the learning systems is adapted based on the current result of the merged state classification and at least one previous result of the merged state classification.

In one aspect of the invention at least one first learning system is a time domain learning system and/or at least one second learning system is a frequency domain learning system.

In one aspect of the invention the measurement result data corresponds to measurements of operational data of an IT system and/or the state classification is a normal state and a abnormal state of the IT System.

The invention further relates to a system for combining at least two learning systems for data processing, comprising: at least two learning systems, and a measurement result data reception unit configured to receive measurement result data of at least one predetermined time interval and to provide the measurement result data to the at least two learning systems, wherein each of the learning systems is configured to separately processes each measurement result data of a predetermined time interval, and is further configured to separately calculate a numeric score for each processed measurement result data, a consolidation unit for each learning system, each consolidation unit being configured to classify the calculated numeric score of each measurement result data based on a consolidation function, and the consolidation function being configured to classify the numeric scores into at least two classification groups, each classification group corresponding to at least two states, and a merging unit configured to merge the classification groups based on a classification group merging function to at least one state classification based on a merging model.

In one aspect of the invention the configuration of at least one of the consolidation functions and/or the learning systems is adapted based on the current result of the merged state classification and/or the configuration of at least one of the consolidation functions and/or the learning systems is adapted based on the current result of the merged state classification and at least one previous result of the merged state classification.

In one aspect of the invention at least one first learning system is a time domain learning system and/or at least one second learning system is a frequency domain learning system.

In one aspect of the invention the measurement result data corresponds to measurements of operational data of an IT system and/or wherein the state classification is a normal state and a abnormal state of the IT System.

It is a general concept of the present invention to combine time and frequency domain ML systems and based on a combination function, which allows improving sensitivity and specificity in comparison to either one of the ML system in the time or in the frequency domain.

Hereinafter the method is described in terms of a classification of a system, which can be in a normal state or in an abnormal state. The method provides a classification result. The state of the system is described by a plurality of system state properties. The true state of the system is not known at any time.

To monitor the system a plurality of numeric measurements are performed providing a plurality of real time data each describing at least one of the system state properties. At least two different ML systems are combined. First, a time domain ML system, which uses a model based on the measurements in the time domain. After a predetermined learning period the time domain ML system provides a numerical classification of the incoming numeric real time data which allows determining whether or not the system is in a normal or abnormal state. Second a frequency domain ML system, which uses a model based on measurements in the frequency domain. After a predetermined learning period the frequency domain ML system provides a numerical classification of the incoming numeric real time data which allows determining whether or not the system is in a normal or abnormal state.

The method is best described in four phases.

The first phase starts with the incoming of new measurement data. The incoming data is submitted to each of the ML systems, i.e. the time and the frequency domain ML system. Each of the ML systems classifies the submitted measurement with the trained model and rates the measurement with a numeric score, which allows determining whether or not the measurement is a normal state according to the learned model. The measurements are rated in both the frequency and the time domain, respectively.

In a second phase the rated measurements are submitted together with their numeric score to a consolidation-function. The consolidation-function groups the measurements into classification groups in each of the frequency and the time domain, respectively. In a preferred embodiment the temporal distribution of numeric scores is analyzed.

In one embodiment of the invention a singular exceptional numeric score, which suddenly appears and disappears is classified as an outlier and grouped into the normal group. A plurality of exceptional numeric scores in a predetermined time interval results in the classification of the measurements into the abnormal group.

In a third phase the classification groups are merged to a sate classification by a classification group merging function. The classification groups, which are a result of the third phase, may be different. A measurement may be grouped into different classification groups in the time and frequency domain, e.g. a specific measurement can be grouped abnormal in the frequency domain and normal in the time domain.

The specific embodiments of the classification group merging function may be different based on different merging models. In some embodiments a dynamic merging model may be used. A plurality of merging models is known to the skilled person. In an embodiment of the invention, simple logic functions may be used, e.g. an intersection of the two groups.

In preferred embodiments of the invention, one or more of the following rules may be used for merging:
a) A measurement classified at least once as abnormal corresponds to an abnormal system state.
b) The system state is abnormal, when at least one measurement is grouped abnormal by at least one consolidation function.
c) The system state is abnormal, when at least two measurements out of a predetermined group are classified as abnormal by two consolidation functions or the numeric score of a single measurement is greater than a predetermined value.

The number of possible system states and their characteristic determine which merging model is suitable. The result of the third phase is determined by the used merging model. In a preferred embodiment the result is a classification of system states with a start and an end time.

In a fourth phase after the merging the configuration is adapted. The configuration of the time domain and the frequency domain ML system, the configuration of the time and the frequency domain consolidation function, and/or the configuration of the classification group merging function are adapted. The adaptation is based on the current merging result and/or previous merging results. Based on the merging model, the results are compared to a predetermined merging characteristic. In case of a dynamic merging model, the results of the current classification are stored and used for optimizing the configuration.

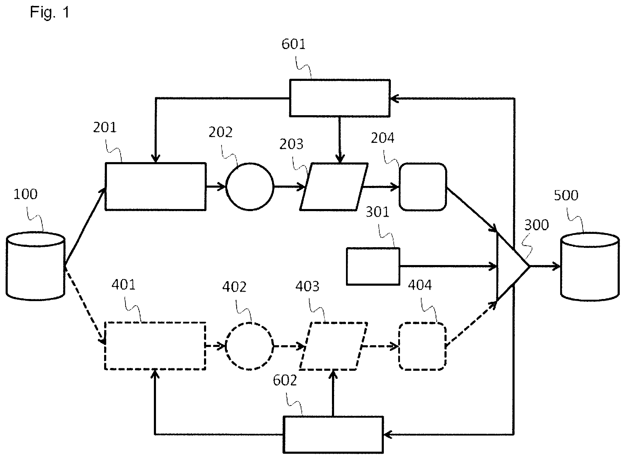

An embodiment of the method according to the invention is illustrated by Figure 1. A measurement 100 is submitted to two different ML systems 201 and 401, a time domain system 201 and a frequency domain system 401. Both systems calculate a numeric score in the time domain 202 and the frequency domain 402, respectively. The numeric scores are submitted to the consolidation function 203 of the time domain and the consolidation function of the frequency domain 403. The consolidation functions form classification groups for the time domain 204 and the frequency domain 404, respectively. The classifications groups are merged in a classification group merging function 300 based on a merging model 301. The classification group merging function 300 classifies the system state and provides data for adapting the configuration of the time domain 601 and the frequency domain 602.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for combining least two learning systems for data processing,
wherein measurement result data (100) of at least one predetermined time interval is measured and provided to at least two learning systems (201, 401),
wherein each measurement result data (100) of a predetermined time interval is separately processed by each of the learning systems (201, 401) and the learning systems (201, 401) are configured to calculate a respective numeric score (202, 402) for each measurement (100) and each learning system,
wherein the respective numeric score (202, 402) is classified by a respective consolidation function (203, 403) and the consolidation function (203, 403) is configured to classify a plurality of respective numeric scores (202, 402) into at least two respective classification groups (204, 404), each classification group (204, 404) corresponding to at least two states, and
wherein the respective classification groups (204, 404) of the at least two learning systems (201, 401) are merged by a classification group merging function (300) to at least one state classification based on a merging model (301).

2. The method of claim 1,
wherein a configuration of at least one of the respective consolidation functions (203, 403) and/or the learning systems (201, 401) is adapted based on the current result of the merged state classification and/or
wherein the configuration of at least one of the respective consolidation functions (203, 403) and/or the learning systems (201, 401) is adapted based on the current result of the merged state classification and at least one previous result of the merged state classification.

3. The method of claim 1 or 2,
wherein at least one first learning system (201) is a time domain learning system and/or
wherein at least one second learning system (401) is a frequency domain learning system.

4. The method of any one of claims 1 to 3,
wherein the measurement result data (100) corresponds to measurements of operational data of an IT system and/or
wherein the state classification is a normal state and a abnormal state of the IT System.

5. A system for combining at least two learning systems for data processing, comprising:
at least two learning systems (201, 401), and
a measurement result data reception unit configured to receive measurement result data (100) of at least one predetermined time interval and to provide the measurement result data (100) to the at least two learning systems (201, 401), wherein each of the learning systems (202, 402) is configured to separately processes each measurement result data (100) of a predetermined time interval, and is further configured to separately calculate a numeric score (202, 402) for each processed measurement result data (100),
a consolidation unit for each learning system (202, 402), each consolidation unit being configured to classify the calculated numeric score (202, 402) of each measurement result data (100) based on a consolidation function (203, 403), and the consolidation function (203, 403) being configured to classify the numeric scores (202, 402) into at least two classification groups (204, 404), each classification group (204, 404) corresponding to at least two states, and
a merging unit configured to merge the classification groups (204, 404) based on a classification group merging function (300) to at least one state classification based on a merging model (301).

6. The system of claim 5,
wherein the configuration of at least one of the consolidation functions (203, 403) and/or the learning systems (201, 401) is adapted based on the current result of the merged state classification and/or
wherein the configuration of at least one of the consolidation functions (203, 403) and/or the learning systems (201, 401) is adapted based on the current result of the merged state classification and at least one previous result of the merged state classification.

7. The system of claim 5 or 6,
wherein at least one first learning system (201) is a time domain learning system and/or
wherein at least one second learning system (401) is a frequency domain learning system.

8. The system of any one of claims 5 to 7,
wherein the measurement result data (100) corresponds to measurements of operational data of an IT system and/or
wherein the state classification is a normal state and a abnormal state of the IT System.

## Amended claims

### Amended claims in accordance with Rule 137(2) EPC.

1. A method for combining least two learning systems for data processing,
wherein measurement result data (100) of at least one predetermined time interval is measured and provided to at least two learning systems (201, 401),
wherein each measurement result data (100) of a predetermined time interval is separately processed by each of the learning systems (201, 401) and the learning systems (201, 401) are configured to calculate a respective numeric score (202, 402) for each measurement result data (100) and each learning system,
wherein the respective numeric score (202, 402) is classified by a respective consolidation function (203, 403) and the consolidation function (203, 403) is configured to classify a plurality of respective numeric scores (202, 402) into at least two respective classification groups (204, 404), each classification group (204, 404) corresponding to at least two states,
wherein the respective classification groups (204, 404) of the at least two learning systems (201, 401) are merged by a classification group merging function (300) to at least one state classification based on a merging model (301),
wherein at least one first learning system (201) is a time domain learning system, which uses a model based on the measurements in the time domain,
wherein at least one second learning system (401) is a frequency domain learning system, which uses a model based on measurements in the frequency domain. and
wherein the classification group merging function (300) classifies the system state and provides data for adapting the configuration of the time domain and the frequency domain learning systems (201, 401).

2. The method of claim 1,
wherein a configuration of at least one of the respective consolidation functions (203, 403) and/or the learning systems (201, 401) is adapted based on a current result of the merged state classification and/or
wherein the configuration of at least one of the respective consolidation functions (203, 403) and/or the learning systems (201, 401) is adapted based on the current result of the merged state classification and at least one previous result of the merged state classification.

3. The method of any one of claims 1 or 2,
wherein the measurement result data (100) corresponds to measurements of operational data of an IT system and/or
wherein the state classification is a normal state and a abnormal state of the IT System.

4. A system for combining at least two learning systems for data processing, comprising:
at least two learning systems (201, 401), and
a measurement result data reception unit configured to receive measurement result data (100) of at least one predetermined time interval and to provide the measurement result data (100) to the at least two learning systems (201, 401), wherein each of the learning systems (202, 402) is configured to separately processes each measurement result data (100) of a predetermined time interval, and is further configured to separately calculate a numeric score (202, 402) for each processed measurement result data (100),
a consolidation unit for each learning system (202, 402), each consolidation unit being configured to classify the calculated numeric score (202, 402) of each measurement result data (100) based on a consolidation function (203, 403), and the consolidation function (203, 403) being configured to classify the numeric scores (202, 402) into at least two classification groups (204, 404), each classification group (204, 404) corresponding to at least two states,
a merging unit configured to merge the classification groups (204, 404) based on a classification group merging function (300) to at least one state classification based on a merging model (301),
wherein at least one first learning system (201) is a time domain learning system, which uses a model based on the measurements in the time domain,
wherein at least one second learning system (401) is a frequency domain learning system, which uses a model based on measurements in the frequency domain, and
wherein the classification group merging function (300) classifies the system state and provides data for adapting the configuration of the time domain and the frequency domain learning systems (201, 401).

5. The system of claim 4,
wherein the configuration of at least one of the consolidation functions (203, 403) and/or the learning systems (201, 401) is adapted based on a current result of the merged state classification and/or
wherein the configuration of at least one of the consolidation functions (203, 403) and/or the learning systems (201, 401) is adapted based on the current result of the merged state classification and at least one previous result of the merged state classification.

6. The system of any one of claims 4 or 5,
wherein the measurement result data (100) corresponds to measurements of operational data of an IT system and/or
wherein the state classification is a normal state and a abnormal state of the IT System.
